# EUROPEAN PATENT APPLICATION

(11) **EP 1 090 709 A2**
(43) Date of publication of application: **11.04.2001**
(21) Application number: 00121087.1
(22) Date of filing: 28.09.2000
(51) Int. Cl.: B23K 26/00, B23K 26/14, B41C 1/18

(54) **Apparatus for engraving a printing roller with a laserbeam**

(30) Priority: 28.09.1999 IT MO990195
(71) Applicant: Sighinolfi, Sergio, 41100 Modena (IT)
(72) Inventor: Sighinolfi, Sergio, 41100 Modena (IT)
(74) Representative: Luppi, Luigi

(57) **Abstract**

An engraving apparatus for engraving a surface (S) by means of a laser beam, comprises an engraving head (15) suitable for projecting and focusing, through a suitable opening (41), a laser beam (F) on said surface (S), said engraving head (15) being provided with an inner chamber (40) communicating with said opening (41), the engraving apparatus further comprises circulating means (43, 44, 45, 46, 47) suitable for circulating a gaseous pressurized fluid through said chamber (40) and into said opening (41).

## Description

The invention relates to an apparatus for engraving a printing roller with a laser beam.

From prior art engraving apparatus are known for engraving a printing roller with a laser beam, comprising an engraving head suitable for projecting and focusing, through a suitable opening, a laser beam on the surface to be engraved. Inside the head a chamber is provided, interposed between focusing means of said laser beam and said opening, in which vacuum is obtained for sucking up, through said opening, smokes produced by combustion of the material forming the surface to be engraved, when said material is hit by the laser beam. Smokes have to be sucked up in order to prevent them from shielding the laser beam so decreasing or neutralizing the effectiveness thereof and from damaging the focusing means of the laser beam.

This kind of devices has various drawbacks. First of all, since the head, in use, is in contact with the surface to be engraved, the vacuum created inside the head causes the surface to be engraved to be sucked up into the chamber and, therefore, to adhere to the chamber so becoming wrinkled, which prevents the engravings to be obtained from having a appropriately controlled geometric shape. Furthermore, since the surface to be engraved adheres to the head, sliding of the head on the surface is hindered and an adequate evacuation of the smokes from the engraving area is not allowed, with the risk of smokes stagnation in the chamber obtained inside the engraving head, which not only causes the laser beam to be shielded, so decreasing the effectiveness thereof, but also may cause the focusing means of the laser beam to be damaged or even broken.

Furthermore, with the engraving heads of prior art, the engravings may be deformed in the sliding direction of the surface to be engraved with respect to the engraving head, because the smokes tend to stagnate along said sliding direction causing shielding, and so smaller engraving effect of the laser beam.

Object of the present invention is to find a remedy to the above-mentioned drawbacks.

In a first aspect of the present invention, there is provided an engraving apparatus for engraving a surface by means of a laser beam, comprising an engraving head suitable for projecting and focusing, through a suitable opening, a laser beam on said surface, said engraving head being provided with an inner chamber communicating with said opening, characterized in that it further comprises circulating means suitable for circulating a gaseous pressurized fluid through said chamber and into said opening.

Owing to the invention, it is possible to obtain a better smokes evacuation from the engraving area, because, when vacuum is not present in the chamber of the engraving head, the risk that the surface to be engraved adheres to the head is prevented, so hindering evacuation of smokes. Furthermore, the risk of deformations of the surface to be engraved in the contact area with the engraving head is prevented too, which allows a better control of the geometric shape of the engravings to be obtained on said surface.

In a second aspect of the present invention, there is provided an engraving apparatus for engraving a surface by means of a laser beam, comprising an engraving head suitable for projecting and focusing, through a suitable opening, a laser beam on said surface, said engraving head being provided with an inner chamber communicating with said opening, characterized in that it further comprises regulating means for regulating pressure of said engraving head on said surface.

Owing to this aspect of the invention, the surface to be engraved is protected from possible damages caused by friction of the engraving head on said surface.

In a third aspect of the present invention, there is provided an engraving apparatus for engraving a surface by means of a laser beam, comprising an engraving head suitable for projecting and focusing, through a suitable opening, a laser beam on said surface, said engraving head being provided with an inner chamber communicating with said opening, characterized in that it further comprises focusing controller means.

Owing to this aspect of the invention, it is possible to obtain new decorating effects in a very easy way.

The invention will be shown in greater detail here below, for exemplifying and non-limiting purpose, with reference to the attached drawings, in which:
Figure 1 is a schematic elevation view of an apparatus according to the invention;
Figure 2 is a schematic side view, from left, of figure 1;
Figure 3, is a view of the engraving head and of the supporting means thereof;
Figure 4 is an axial section of the engraving head of Figure 3;
Figure 5 is a section taken along plane V-V of Figure 4;

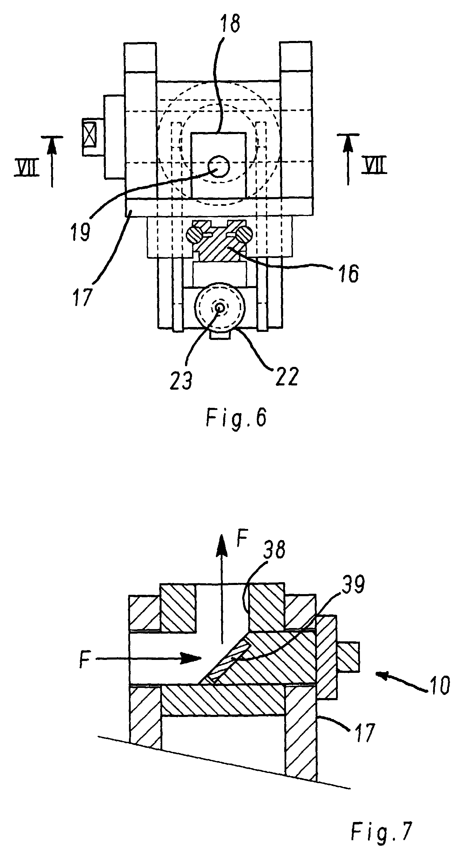

Figure 6 is a section taken along plane VI-VI of Figure 3;
Figure 7 is a section taken along plane VII-VII of Figure 6;
Figure 8 is a schematic enlarged section of a variation of an end of an engraving head of an apparatus according to the invention;
Figure 9 is a left view of Figure 8;
Figure 10 is a section like that of figure 8, referring to a further variation of an engraving head of an apparatus according to the invention;
Figure 11 and 12 shows differences between engravings, shown with dash lines, obtainable with apparatus according to prior art, and engravings, shown with continuous lines, obtainable with an apparatus according to the invention.

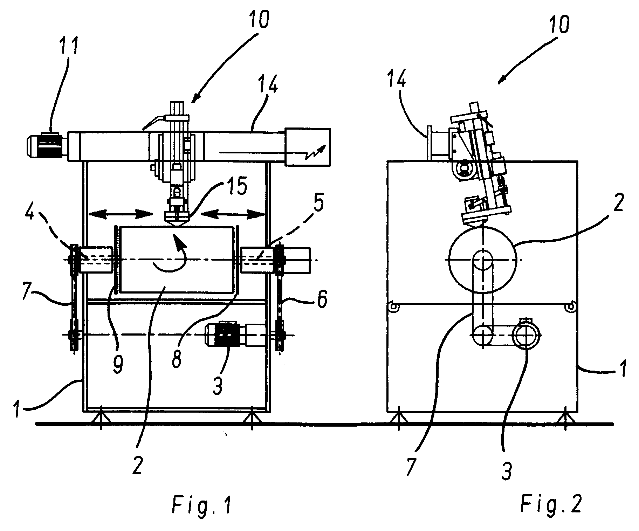

In Figures 1 and 2 an apparatus according to the invention is shown, comprising a frame 1 to which a cylinder 2 is rotatably supported, the surface of said cylinder 2 having to be engraved by a laser beam. The cylinder 2 is coupled to two flanges 8, 9, placed at opposite ends of the cylinder 2 and connected to two shafts 4 and 5, respectively, synchronously rotated by a motor 3, through transmissions 6 and 7, for example belt transmissions. The two shafts 4 and 5 are synchronously rotated in order to prevent torsional deformations of the surface of the cylinder 2 which has to be engraved.

To the frame 1 of the apparatus 1, above the cylinder 2, an engraving device 10 is supported, which may be caused to slide, by means of a further motor 11, in a direction substantially parallel to the axis of the cylinder 2.

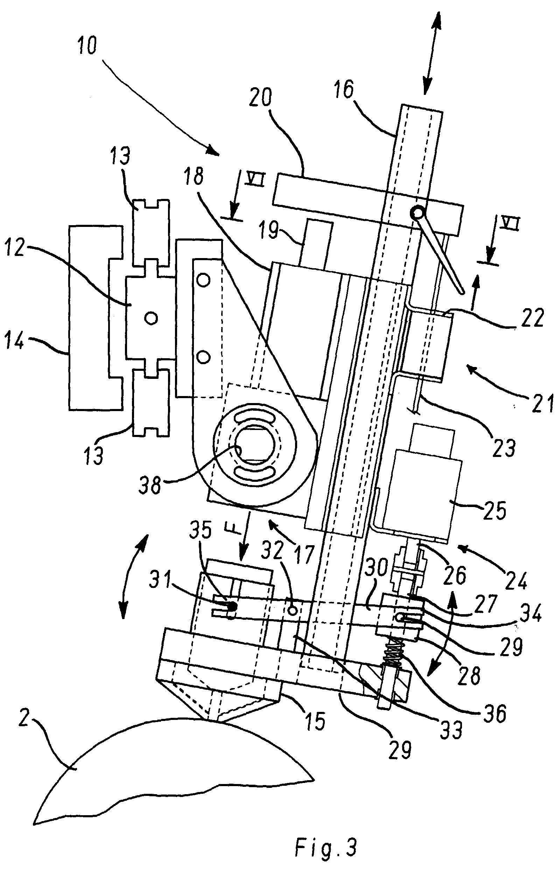

As shown in Figure 3, the engraving device 10 is fixed to a trolley 12 which may be caused to slide, by means of the further motor 11, along slides 13 associated to a cross-bar 14 of the frame 1.

The engraving device 10 comprises a frame 17, connected to said trolley 12, to which is slidably coupled a rod 16, an engraving head 15 being fixed to an end of said rod 16. The rod 16, and thus the engraving head 15 connected thereto, may be caused to slide with respect to the frame 17, departing from the cylinder 2, by means of an operating cylinder 18, whose stem 19 engages against a stop element 20, fixed in adjustable position to the rod 16. In this way, the engraving head 15 may be removed from the surface of the cylinder 2, when an already-engraved cylinder has to be replaced with a new cylinder to be engraved.

After having replaced the cylinder 2 with a new cylinder 2 to be engraved, the head 15 may be re-positioned in contact with the surface of the new cylinder 2, withdrawing the stem 19 of the operating cylinder 18 so that the rod 16 is able to slide by gravity in the frame 17. The head 15 is associated to pressure regulating means, suitable for regulating the pressure exerted by the head 15 on the surface of the cylinder 2. Said pressure regulating means 21 comprises an electromagnet 22 associated to a ferromagnetic nucleus 23 extending parallelly to the rod 16. When the electromagnet 22 is operated, the interaction between said electromagnet 22 and the ferromagnetic nucleus 23 produces a counterforce acting in a direction parallel to the rod 16 and opposite with respect to the component of the force of gravity in said direction. Therefore, varying the current running along the electromagnet 22, it is possible to regulate said counterforce, so regulating the contact pressure between the head 15 and the surface of the cylinder 2, since said contact pressure is proportional to the difference between said component of the force of gravity and said counterforce.

The frame 17 is further provided with focusing controller means 24, for accurately controlling the distance between a focusing lens 42 and the surface of the cylinder 2 to be engraved. The focusing controller means 24 comprises a stepping motor 25 whose shaft 26 is suitable for rotating a screw 27 having a first end coupled to said shaft 26 and a second end rotatably coupled to a flange 29 of the engraving head 15. A nut screw 28 is coupled to the screw 27, said nut screw 28 being counteracted by a spring 36. A pin 29 protrudes from said nut screw 28. Said pin 29 is engaged by a first fork-shaped end 34 of a rocker arm 30, whose second fork-shaped end 35 engages a further pin 31 protruding from said engraving head 15 and connected to a lens-holding sleeve 37a slidably coupled to a seat 37b of said engraving head. The rocker arm 30 is hinged, in a middle point 32 thereof to an ear 33 of said flange 29.

When the stepping motor 25 is operated, the screw 27 is caused to rotate and the nut screw 28 moves along the screw 27, rotating the rocker arm 30 around its middle point 32, so that the second end 35 of said rocker arm 30 moves the lens-holding sleeve 37a into the engraving head 15 in a direction substantially perpendicular to the surface of the cylinder 2, in order to increase, or decrease, the distance between the lens 42 and said surface. In this way, special engraving effects may be obtained varying in the above-described way focusing of a laser beam F passing through the lens 42.

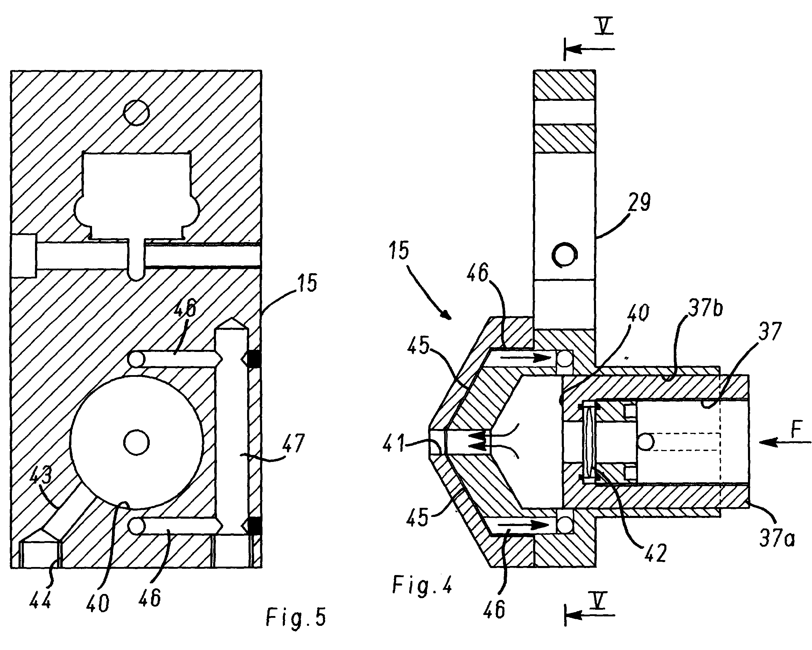

The engraving head 15 (Figure 4) is internally provided with a first cavity 37 defined by the lens-holding sleeve 37a and optically open at booth ends, through which the laser beam F generated by laser generator not shown is directed. The laser beam F generated by the laser generator is initially directed in a direction substantially parallel to the axis of the cylinder 2, causing said laser beam F to enter into a chamber 38 of the engraving device 10, inside which a mirror 39 is placed which deviates the laser beam F toward the chamber 37 of the engraving head 15. The chamber 37 is optically coupled to a further chamber 40 of the engraving head 15, in turn communicating with an outlet hole 41 through which the laser beam F intended to hit the surface of the cylinder 2 in the areas to be engraved is focused. Focusing of the laser beam F is performed by a focusing device, for example the lens 42 or a set of lenses.

The chamber 40 further communicates with an inlet conduit 43 into which a pressurized gaseous fluid, for example air, may be introduced from the outside through an inlet hole 44, said pressurized gaseous fluid enters into the chamber 40 and from the chamber 40 enters into the hole 41 and into a clearance 41 obtained in the head 15 and communicating, through canalisations 46, with a evacuation conduit 47. The pressurized fluid, circulating through the chamber 40, the clearances 45, the canalisations 46 and the evacuation conduit 47 drags in a gaseous stream the smokes generated by the combustion of the surface of the cylinder in the area hit by the laser beam F and removes the smokes from said area, evacuating said smokes from the chamber 40, without causing any mechanical deformation on the surface of the cylinder 2. Therefore, it is possible to prevent damages caused to the focusing apparatus 42 by said smokes and to prevent smokes from shielding the laser beam F both in the chamber 40 and in the impact are of the laser beam F on the surface of the cylinder 2.

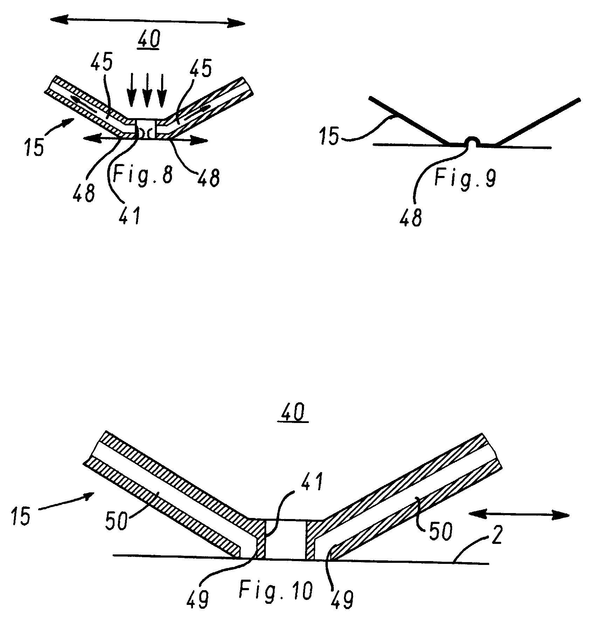

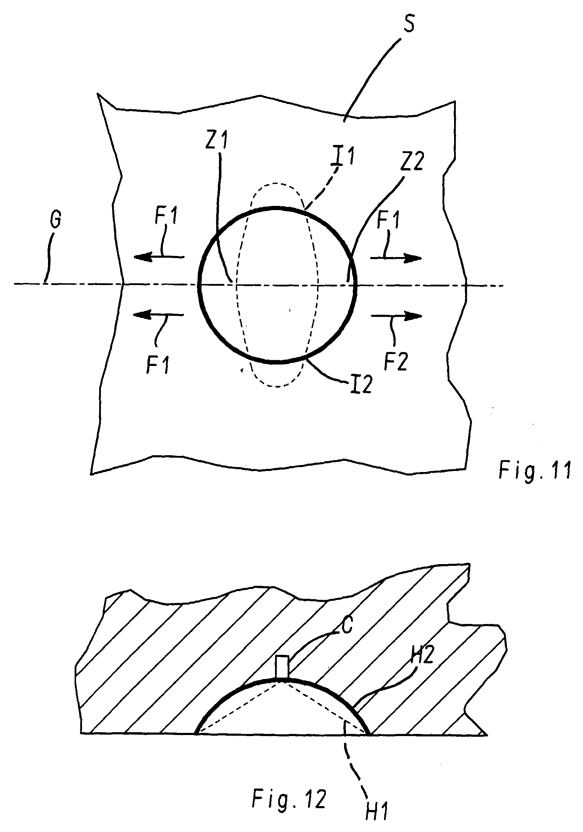

In figures 8 and 9, a variation of an engraving head according to the invention is shown, in which, at the outer end of the outlet hole 41 of the laser beam F two opposite slits 48, communicating with said hole 41, are obtained. These slits 48 are arranged in a direction substantially parallel to the generatrices of the surface of the cylinder and are suitable for directing in said direction a part of said pressurized fluid coming from the chamber 40 of the head 15 through the hole 41, so as to generate two fluid streams. The object of these two fluid streams is shown in Figure 11, in which a very enlarged view of the outline of a punctiform engraving I1 obtained with an apparatus according to prior art is shown with dash lines, and the outline of a punctiform engraving I2 obtained with the engraving head 15 of Figures 8 and 9 is shown with continuous lines. In Figure 11 the reference S shows a portion of the surface of the cylinder 2, the reference G shows a generatrix of the surface S and the references F1 , F2 show the outflow directions of said fluid streams from the engraving head. The engraving obtained with an apparatus of prior art shows an oval-shaped outline I1 since the smokes generated by the combustion of the material of the surface S tend to stagnate in the zones Z1 and Z2 of said outline shielding the laser beam F and so decreasing the effectiveness of its action in said zones. In the engraving obtained with the head 15 shown in Figures 8 and 9, the outline I2 of the engraving is substantially circular, since the fluid streams leaving the slits 48 in the directions of the arrows F1 and F2 prevent the smokes from stagnating so allowing the laser beam F to perform substantially the same action on the whole engraving zone and therefore allowing the engraving to be obtained with a better controlled shape.

In Figure 10 a further version of an engraving head 15, in which a further pair of holes 49, communicating with a respective pair of conduits 50 fed with said pressurized fluid, ends around the outlet hole 41 of the laser beam F. Said pressurized fluid coming out from said pair of holes allows the contact pressure present between the engraving head 15 and the surface of the cylinder 2 to be reduced, so decreasing friction and facilitating sliding of the head 15 on the surface of the cylinder 2 during engraving operations.

In Figure 12 the shape of the section of an engraving H1 obtained with an apparatus of prior art is shown with dash lines, while the shape of an engraving H2 obtained with an apparatus according to the invention is shown with continuous lines. As shown, the engraving H1 has a conical profile, with a crater C at the vertex of the conical profile, while the engraving H2 has a profile substantially shaped as a spherical cap. The shape of the engraving H2 is due to the better evacuation of the smokes generated by combustion of the material of the surface of the cylinder 2, caused by the laser beam F, said shape allows a better discharge of the ink, or of the glaze, during printing, with consequent better quality of the obtained printing.

The apparatus according to the invention is particularly suitable for engraving decorating means suitable for decorating the exposed surface of ceramic tiles transferring by contact to said exposed surface a layer of ceramic glaze.

In practice, materials, dimensions and constructive details, may be different from, but technically equivalent to those described without departing from the scope of the present invention.

## Claims

1. Engraving apparatus for engraving a surface (S) by means of a laser beam, comprising, an engraving head (15) suitable for projecting and focusing, through a suitable opening (41), a laser beam (F) on said surface (S), said engraving head (15) being provided with an inner chamber (40) communicating with said opening (41), characterized in that it further comprises circulating means (43, 44, 45, 46, 47) suitable for circulating a gaseous pressurized fluid through said chamber (40) and into said opening (41).

2. Engraving apparatus according to claim 1, wherein said circulating means (43, 44, 45, 46, 47) comprises introducing means (43, 44) suitable for introducing said gaseous fluid into said chamber (40).

3. Engraving apparatus according to claim 1, or 2, wherein said circulating means comprises clearance means (45) communicating with said hole (41).

4. Engraving apparatus according to claim 3, wherein said clearance means (45) further communicates with canalisation means (46) connected to evacuation conduit means (47), for evacuating said gaseous fluid.

5. Engraving apparatus according to any one of the preceding claims, and further comprising opening means (48) communicating with said hole (41) and ending at the outside of said chamber (40).

6. Engraving apparatus according to claim 5, wherein said opening means comprises a pair of slits (48) arranged in opposite positions with respect to said hole (41).

7. Engraving apparatus according to any one of the preceding claims, and further comprising further clearance means (50) ending in a position facing the surface to be engraved and fed with said fluid.

8. Engraving apparatus according to any one of the preceding claims, wherein said engraving head (15) is associated to coupling means (16) slidably coupled to a frame (17) of the apparatus.

9. Engraving apparatus according to any one of the preceding claims, and further comprising regulating means (21) for regulating the pressure of said engraving head (15) on said surface (S).

10. Engraving apparatus according to claim 9, wherein said regulating means (21) comprises an electromagnet (22) fixed to said coupling means (16) and a ferromagnetic nucleus (23) extending parallelly to said coupling means (16).

11. Engraving apparatus according to any one of the preceding claims, and further comprising focusing controller means (24) comprising motor means (25) driving rocker arm means (30) acting on a lens-holding sleeve (37a) of said engraving head (15).

12. Engraving apparatus according to claim 11, wherein said motor means (15) comprises a stepping motor (25) whose shaft 26 operates a screw (27) coupled to a nut screw (28) to which an end of said rocker arm means(30) is rotatably coupled, the other end of said rocker arm means (30) being coupled to said lens-holding sleeve (37a).

13. Engraving apparatus according to any one of the preceding claims, and further comprising handling means (18, 19, 20) for removing said engraving head (15) from said surface (S).

14. Engraving apparatus according to claim 13, wherein said handling means (18, 19, 20) comprises an operating cylinder (18) connected to said frame (17), whose stem (19) is suitable for interacting with stop means (20) adjustably fixed to said sliding means (16).

15. Engraving apparatus according to any one of the preceding claims, wherein said frame means (17) are connected to trolley means (12) slidably coupled to slides (13) connected to the structure (1) of the apparatus.

16. Engraving apparatus according to any one of the preceding claims, and further comprising deviating means (39) for deviating toward said engraving head (15) a laser beam generated by laser beam generating means.

17. Engraving apparatus for engraving a surface (S) by means of a laser beam, comprising an engraving head (15) suitable for projecting and focusing, through a suitable opening (41), a laser beam (F) on said surface (S), said engraving head (15) being provided with an inner chamber (40) communicating with said opening (41), characterized in that it further comprises regulating means (21) for regulating pressure of said engraving head (15) on said surface (S).

18. Engraving apparatus according to claim 17, and further comprising circulating means (43, 44, 45, 46, 47) suitable for circulating a pressurized gaseous fluid through said chamber (40) and into said opening (41).

19. Engraving apparatus according to claim 18, wherein said circulating means (43, 44, 45, 46, 47) comprises introducing means (43, 44) for introducing said gaseous fluid into said chamber (40).

20. Engraving apparatus according to claim 18, or 19, wherein said circulating means comprises clearance means (45) communicating with said hole (41).

21. Engraving apparatus according to claim 20, wherein said clearance means (45) further communicates with canalisation means (46) connected to evacuation conduit means (47), for evacuating said gaseous fluid.

22. Engraving apparatus according to any one of claims 17 to 21, and further comprising opening means (48) communicating with said hole (41) and ending at the outside of said chamber (40).

23. Engraving apparatus according to claim 22, wherein said opening means (48) comprises a pair of slits (48) arranged in opposite positions with respect to said hole (41).

24. Engraving apparatus according to any one of claims 17 to 23, and further comprising further clearance means (50) ending in a position facing the surface to be engraved and fed with said fluid.

25. Engraving apparatus according to any one of claims 17 to 24, wherein said engraving head (15) is associated to coupling means (16) slidably coupled to a frame (17) of the apparatus.

26. Engraving apparatus according to any on of claim 17 to 25, wherein said regulating means (21) comprises an electromagnet (22) fixed to said coupling means (16) and a ferromagnetic nucleus (23) extending parallelly to said coupling means (16).

27. Engraving apparatus according to any one of claims 17 to 26, and further comprising focusing controller means (24) comprising motor means (25) driving rocker arm means (30) acting on a lens-holding sleeve (37a) of said engraving head (15).

28. Engraving apparatus according to claim 27, wherein said motor means comprises a stepping motor (25) whose shaft 26 operates a screw (27) coupled to a nut screw (28) to which an end of said rocker arm means(30) is rotatably coupled, the other end of said rocker arm means (30) being coupled to said lens-holding sleeve (37a).

29. Engraving apparatus according to any one of claims 17 to 28, and further comprising handling means (18, 19, 20) for removing said engraving head (15) from said surface (S).

30. Engraving apparatus according to claim 29, wherein said handling means (18, 19, 20) comprises an operating cylinder (18) connected to said frame (17), whose stem (19) is suitable for interacting with stop means (20) adjustably fixed to said sliding means (16).

31. Engraving apparatus according to any one of claims 17 to 30, wherein said frame means (17) are connected to trolley means (12) slidably coupled to slides (13) connected to the structure (1) of the apparatus.

32. Engraving apparatus according to any one of claims 17 to 31, and further comprising deviating means (39) for deviating toward said engraving head (15) a laser beam generated by laser beam generating means.

33. Engraving apparatus for engraving a surface (S) by means of a laser beam, comprising an engraving head (15) suitable for projecting and focusing, through a suitable opening (41), a laser beam (F) on said surface (S), said engraving head (15) being provided with an inner chamber (40) communicating with said opening (41), characterized in that it further comprises focusing controller means (24).

34. Engraving apparatus according to claim 33, and further comprising circulating means (43, 44, 45, 46, 47) suitable for circulating a pressurized gaseous fluid through said chamber (40) and into said opening (41).

35. Engraving apparatus according to claim 34, wherein said circulating means (43, 44, 45, 46, 47) comprises introducing means (43, 44) for introducing said gaseous fluid into said chamber (40).

36. Engraving apparatus according to claim 34, or 35, wherein said circulating means comprises clearance means (45) communicating with said hole (41).

37. Engraving apparatus according to claim 36, wherein said clearance means (45) further communicates with canalisation means (46) connected to evacuation conduit means (47), for evacuating said gaseous fluid.

38. Engraving apparatus according to any one of claims 33 to 36, and further comprising opening means (48) communicating with said hole (41) and ending at the outside of said chamber (40).

39. Engraving apparatus according to claim 38, wherein said opening means (48) comprises a pair of slits (48) arranged in opposite positions with respect to said hole (41).

40. Engraving apparatus according to any one of claims 33 to 39, and further comprising further clearance means (50) ending in a position facing the surface to be engraved and fed with said fluid.

41. Engraving apparatus according to any one of claims 33 to 40, wherein said engraving head (15) is associated to coupling means (16) slidably coupled to a frame (17) of the apparatus.

42. Engraving apparatus according to any one of claims 33 to 41, and further comprising regulating means (21) for regulating the pressure of said engraving head (15) on said surface (S).

43. Engraving apparatus according to claim 42, wherein said regulating means (21) comprises an electromagnet (22) fixed to said coupling means (16) and a ferromagnetic nucleus (23) extending parallelly to said coupling means (16).

44. Engraving apparatus according to any one of claims 33 to 43, wherein said focusing controller means (24) comprises motor means (25) driving rocker arm means (30) acting on a lens-holding sleeve (37a) of said engraving head (15).

45. Engraving apparatus according to claim 44, wherein said motor means comprises a stepping motor (25) whose shaft (26) operates a screw (27) coupled to a nut screw (28) to which an end of said rocker arm means(30) is rotatably coupled, the other end of said rocker arm means (30) being coupled to said lens-holding sleeve (37a).

46. Engraving apparatus according to any one of claims 33 to 45, and further comprising handling means (18, 19, 20) for removing said engraving head (15) from said surface (S).

47. Engraving apparatus according to claim 46, wherein said handling means (18, 19, 20) comprises an operating cylinder (18) connected to said frame (17), whose stem (19) is suitable for interacting with stop means (20) adjustably fixed to said sliding means (16).

48. Engraving apparatus according to any one of claims 33 to 47, wherein said frame means (17) are connected to trolley means (12) slidably coupled to slides (13) connected to the structure (1) of the apparatus.

49. Engraving apparatus according to any one of claims 33 to 48, and further comprising deviating means (39) for deviating toward said engraving head (15) a laser beam generated by laser beam generating means.
